# EUROPEAN PATENT SPECIFICATION

(11) **EP 4 385 783 B1**
(45) Date of publication and mention of the grant of the patent: **11.06.2025**
(21) Application number: 22214389.3
(22) Date of filing: 16.12.2022
(51) Int. Cl.: B60K 15/05

(54) **CHARGE PORT DOOR ASSEMBLY FOR AN ELECTRICALLY PROPELLED VEHICLE**
LADEANSCHLUSSTÜRANORDNUNG FÜR EIN ELEKTRISCH ANGETRIEBENES FAHRZEUG
ENSEMBLE PORTE D'ORIFICE DE CHARGE POUR VÉHICULE À PROPULSION ÉLECTRIQUE

(43) Date of publication of application: 19.06.2024
(73) Proprietor: MINEBEA ACCESSSOLUTIONS ITALIA S.P.A., 10044 Pianezza (IT)
(72) Inventor: FRATTINI, Massimo, 10044 PIANEZZA (IT); GRAMAGLIA, Alberto, 10044 PIANEZZA (IT)
(74) Representative: Germain Maureau

(56) References cited:
- EP-A1- 4 026 974
- DE-A1- 102019 100 787
- DE-U1- 202016 105 735
- US-B2- 10 259 315

## Description

### Field of the invention

The present invention relates generally to vehicles and, more particularly, to the charge port of an electric vehicle or of a plug-in hybrid electric vehicle.

### Background of the invention

Electric vehicles and hybrid electric vehicles often have an electric charge port for charging an electric battery with an external power source. The charge port is typically externally mounted, thereby allowing easy access as well as the possibility to lock the passenger compartment while the vehicle is being charged. A charge port door, or charge port flap, usually covers the charge port and must be opened to access the charge port to charge the battery.

The opening and closing of the charge port door may be fully automated by the means of a mechanism assembly comprising one or more electric actuators. The mechanism is configured to transform the movement of the actuator by means of different linkages, among which arms or levers. The kinematic of the actuation mechanism may be configured to multiply the movement generated by the actuator. When an intense load is applied on the charge port door, for instance by an ill-intentioned person, the load exerted on the door is, due to the kinematic of the mechanism, multiplied towards the actuator. Therefore an intense load exerted on the charge port door can break the actuator. Such a situation must of course being avoided as much as possible.

Documents EP 4 026 974 A1, DE 10 2019 100787 A1, DE 20 2016 105735 U1 and US 10 259 315 B2 disclose examples of charge port door assemblies known in the art.

### Summary of the invention

An object of the invention is to provide a charge port door assembly equipped with an actuation system for automatically opening and/or closing the charge port door, the actuation system being configured to safe the actuator when a high intensity load is exerted on the door, for example in case of a break-in attempt.

To this end, the invention relates to a charge port door assembly for a vehicle, comprising:
- a charge port door;
- an actuation system, configured to move the charge port door between a closed position, in which the door is intended to cover a charge port of a vehicle and to remain flush with an outer surface of the vehicle, and an open position, in which the door is intended to permit access to the charge port, the actuation system comprising a linkage connecting the door to a support intended to be fixed relative to the vehicle, and an actuator configured to actuate the linkage to move the door,
   the linkage comprising at least a first lever rotatably coupled to the door,
   the actuation system further comprising at least an actuation arm being directly or indirectly connected at a first end to an output member of the actuator, and connected at an opposite, second end to a tilting member, the actuation arm being movable between a first position corresponding to the closed position of the door and a second position corresponding to the open position of the door,
   the tilting member comprising a tilting lever and an elastic biasing device, the tilting lever being rotatably coupled to the actuation arm, and being rotatably coupled to the first lever, so as to be moveable relative to the first lever between a blocking position and an extended position, the elastic biasing device being configured to bias the tilting lever towards the blocking position.

Thus, the charge port door assembly is protected against breakage and damage of the actuation system: thanks to the tilting member, the actuation system is able to withstand the loads that are transmitted to the actuation system when a very intense force is exerted on the door, for example during a break-in attempt. In such a case, the tilting lever moves to an extended configuration, thereby letting the door move from its closed position towards its open position without inducing excessive loads on the actuation system, and in particular on the actuator. The tilting member according to the invention therefore provides a safety feature that prevents breakage of the actuation system, and in particular of the actuator, in case a very intense force is exerted in the door, for example during a break-in attempt.

The charge port door assembly may comprise the following features, considered either alone or in any technically possible combination:

When the actuation arm is in the first position and the tilting lever is in the blocking position, the door is in the closed position, and, when the actuation arm is in the first position and the tilting lever is in the extended position, the door is in the open position.

When the tilting lever is in the blocking position, a bearing surface of the tilting lever bears on a corresponding bearing surface of the first lever.

The elastic biasing device is configured to allow the tilting lever moving from the blocking position when the tilting lever is subjected to a load which is higher than a specified load.

The specified load is lower than a load likely to damage the actuation system, and in particular the actuator.

The specified load is higher than a maximum load to which the tilting lever is subjected during normal operation of the actuation system.

The elastic biasing device is a spring, for example a coil torsion spring.

The spring rate of the spring is such that the tilting lever reaches the extended position when the tilting lever is subjected to a load, the value of which is lower than the value of a load likely to damage the actuation system, and in particular the actuator.

The actuator is an electric rotary actuator.

The linkage includes a second lever, each of the first and second levers being hinged at one end to the support and being hinged at an opposite end to the door, the first and second levers being configured as a parallelogram mechanism.

The actuation arm is rotatably coupled at a first end to the tilting lever and is rotatably coupled at a second end to an actuation lever, the actuation lever being fixedly coupled to the output member of the actuator.

The actuation system includes a mechanical actuation device, the mechanical actuation device comprising a mechanical link, such as a Bowden cable or a rod, connected to the tilting lever.

The actuation system includes a mechanical actuation device, the mechanical actuation device comprising a mechanical link, such as a Bowden cable or a rod, connected to the actuation lever.

The invention also relates to a vehicle comprising a charge port mounted on a support and a charge port door assembly as disclosed above.

### Brief description of the drawings

Figure 1 illustrates a vehicle equipped with a charge port door assembly according to the invention, the door being closed.
Figure 2 illustrates a charge port door assembly according to the invention, the door being in the closed position.
Figure 3 illustrates the charge port door assembly of Figure 2, the door being in the open position.
Figure 4 is a detailed view of the tilting lever of Figure 2.
Figure 5 illustrates the tilting lever of Figure 4, the components of which are disassembled.
Figure 6 illustrates the functioning of the tilting lever of Figure 4.
Figure 7a illustrates a first variant of the mechanical actuating device of the door assembly.
Figure 7b illustrates a second variant of the mechanical actuating device of the door assembly.

### Detailed description of embodiments

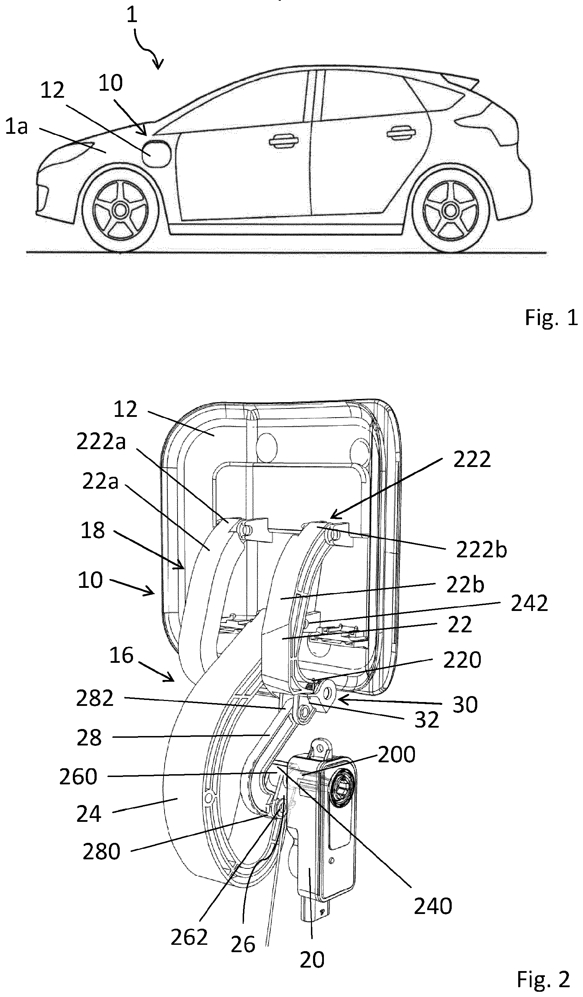

Figure 1 illustrates a vehicle 1 having at least one electric propulsion motor, such as an electric vehicle or a plug-in hybrid electric vehicle. The vehicle is equipped with a charge port (not shown) configured to be connected to a charge plug when the car needs to be charged. The vehicle 1 is also equipped with a charge port door assembly 10 according to the invention, in order to cover and protect the charge port when the latter is not in use.

Figure 2 to 6 illustrate a first embodiment of a charge port door assembly according to the invention.

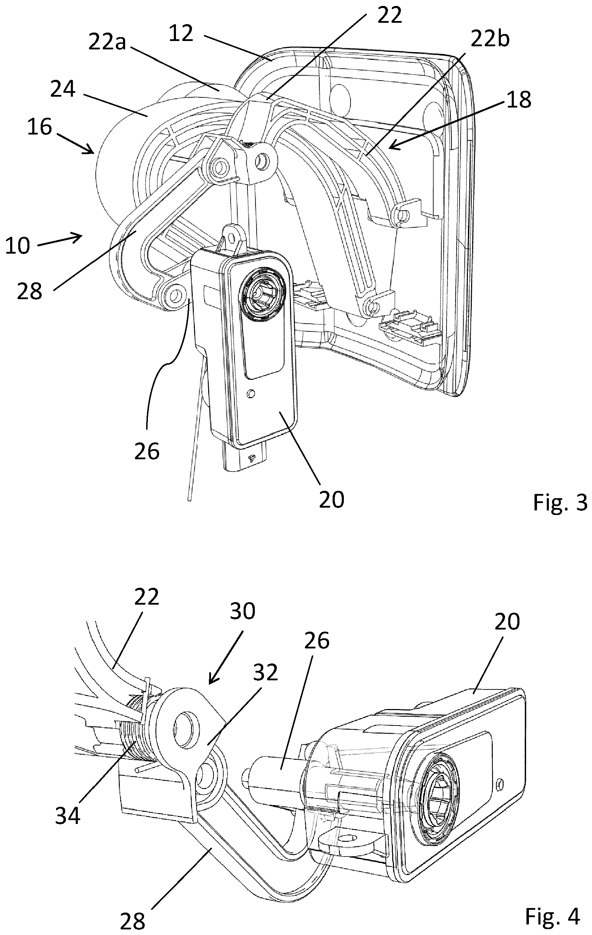

The charge port door assembly 10 comprises a door 12 moveable between a closed position (shown in Figures 1 and 2), in which the door blocks access to the charge port, and an open position (shown in Figure 3), in which the door permits access to the charge port.

The charge port door assembly 10 is mounted onto a charge port support (not shown) which is fixed relative to the vehicle 1. In its closed position, the door 12 is flush with an outer surface of an exterior panel 1a of the vehicle 1, for example a front fender 1a as shown in Figure 1. In its open position, the door 12 uncovers an opening in the panel 1a, thereby allowing access to the charge port.

The door 12 is attached to the support by means of an actuation system 16. The actuation system 16 is configured for automatically moving the door from its closed position to its open position and inversely. To this end, the actuation system 16 includes a linkage 18 and an actuator 20. The actuator 20 is fixed relative to the support of the charge port and is for example an electric rotary actuator.

The linkage 18 connects the door 12 to the support. The linkage 18 includes a lever parallelogram. More particularly, the linkage 18 includes a first lever 22 and a second lever 24. The first lever 22 is hinged at one end 220 to the support and is hinged at an opposite end 222 to the door 12. In the embodiment of Figures 2 and 3, the first lever 22 comprises two connecting arms 22a, 22b, each of the connecting arms having an end 222a, 222b hinged to the door 12. The second lever 24 is hinged at one end 240 to the support and is hinged at an opposite end 242 to the door 12. The first lever 22 and the second lever 24 are thus configured as a parallelogram mechanism (or parallelogram four-bar linkage), which allows maintaining a constant orientation of the door 12 during its motion. It will however being understood that the actuation system could be configured to achieve a different kind of movement for the door without departing from the scope of the invention.

The linkage 18 comprises an actuation lever 26 and an actuation arm 28. The actuation lever 26 is fixedly coupled, at a first end 260, to a rotating output shaft 200 of the actuator 20, and is rotatably coupled, at an opposite, second end 262, to the actuation arm 28. The actuation arm 28 is therefore rotatably coupled, at a first end 280, to the first actuation lever 26, and is rotatably coupled, at an opposite, second end 282, to a tilting member 30, which is connected to the first lever 22. The tilting member 30 includes a tilting lever 32 and an elastic biasing device 34, such as a coil torsion spring 34. The tilting lever 32 is rotatably coupled to the first lever 22 and is rotatably coupled to the actuation arm 28. The elastic biasing device 34, or spring 34, is connected at a first end to the first lever 22 and is connected at a second end to the tilting lever 32. The tilting lever 32 is moveable relative to the first lever 22 between a blocking position and an extended position. The elastic biasing device 34 is configured to bias the tilting lever 32 towards the blocking position, in which the tilting lever 32 cannot rotate relative to the first lever 22. The linkage 18 is thus configured to transmit, during normal operating of the door assembly, the rotational movement of the output shaft 200 of the actuator 20 to the first lever 22, via the actuation lever 26, the actuation arm 28, and the tilting member 32.

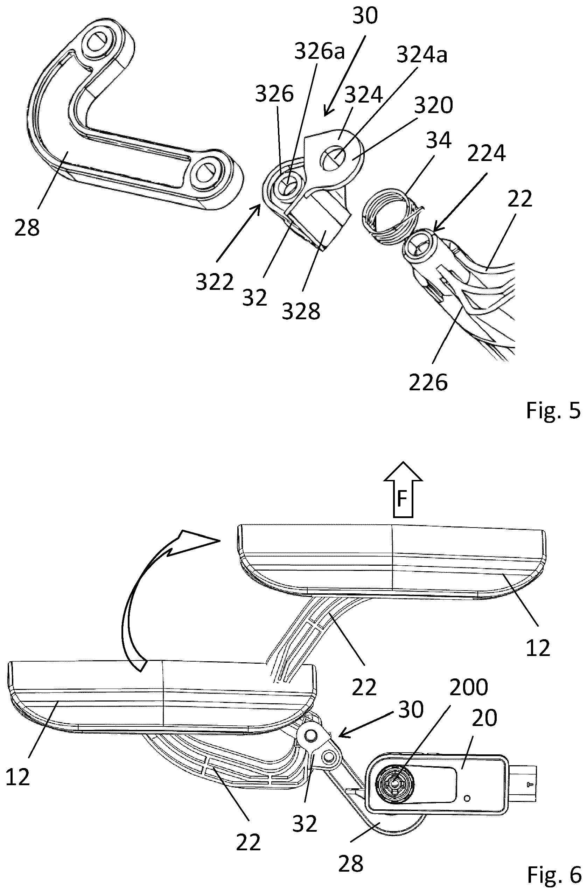

As the tilting lever 32 is biased by the elastic biasing device 34, the tilting lever 32 may rotate relative to the first lever 22, from its blocking position to its extended position (or to any intermediate position) only if the tilting lever is subjected to a load opposite and higher than the load exerted by the spring 34. In such a case, as shown in Figure 6, the rotation of the tilting lever 32 will result in the rotational movement of the first lever 22, in particular when a high intensity force is exerted on the door 12 when the actuator 20 is not energized. In an embodiment, the tilting member 30 is configured to allow the door 12 moving from its closed position to its open position without involving any movement of the actuation arm 28. More particularly, the tilting member 30 is configured to let the first lever 22 rotate upon application of a pulling force on the door 12, the pulling force inducing on the tilting lever 32 a load having an intensity higher than a specified intensity, in particular when the actuator 20 is not energized. Of course, the tilting member 30 is configured not to let the first lever 22 rotate when it is subjected only to loads generated during normal actuation of the charge port door assembly. This is achieved thanks to the tuning of the value of the spring rate of the elastic biasing device 34. In particular, the spring rate value is such that the elastic biasing device will allow the tilting lever 32 moving from the blocking position when subjected to a load lower than a load likely to damage or break the actuation system, and in particular the actuator 20. The tilting member 30 according to the invention therefore provides a safety feature that prevents breaking of the actuation system, and in particular of the actuator 20, in case a very intense force is exerted in the door 12, for example during a break-in attempt.

The tilting member 30 is shown more in detail in Figure 5. The tilting lever 32 is connected to the first lever 22 at a first end 320 and is connected to the actuation arm 28 at an opposite, second end 322. At its first end 320, the tilting member 32 comprises a connecting part 324 having a circular opening 324a configured to receive a shaft 224 of the first lever 22, for example a tube-shaped shaft. The spring 34 is arranged around the shaft 224. A first end of the spring 34 is fixed relative to the first lever 22 and an opposite, second end of the spring 34 is fixed relative to the tilting member 32. For example the first and second ends of the spring 34 can be inserted into corresponding bores provided in the first lever 22 and in the tilting lever 32. At its second end 322, the tilting lever 32 comprises a connecting part 326 having at least one circular opening 326a configured to receive a connecting part for connecting the actuation arm 28. The tilting lever 32 also includes a bearing surface 328, configured to contact and bear on a corresponding bearing surface 226 of the first lever 22 when the tilting lever 32 is in the blocking position, thereby preventing relative rotation of the first lever 22 and the tilting lever 32.

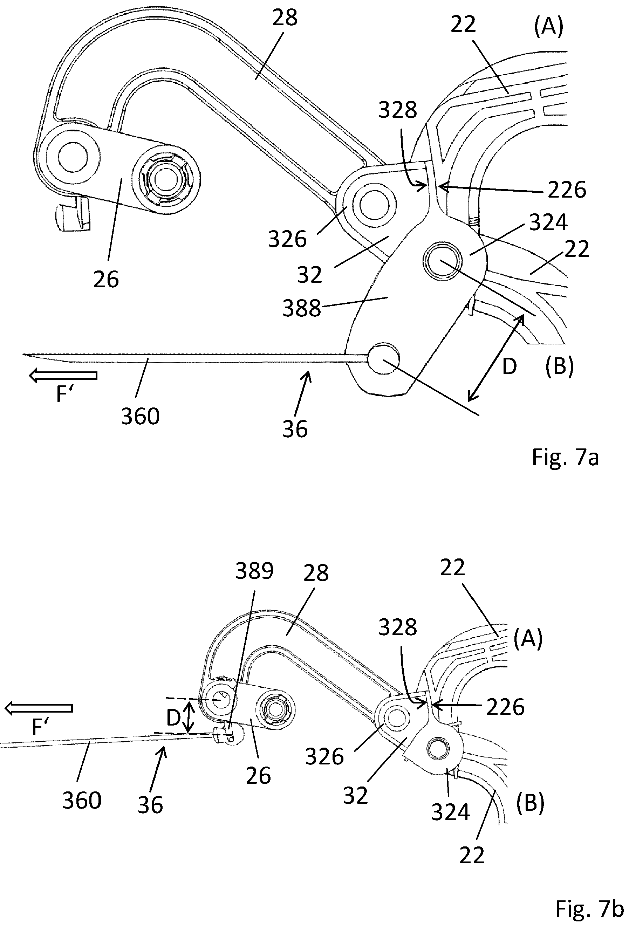

Figures 7a illustrates an embodiment of a charge port door assembly 10 according to the invention, wherein there is provided a mechanical actuation device 36 for opening or closing the door 12 in case the actuation system 16 is not functioning, for example in case of failure of the actuator 20. The mechanical actuation device 36 includes a mechanical link 360, such as a Bowden cable or a rod, connected to a connecting part 388 provided on the tilting lever 32. The connecting part 388 is configured in such a way that the connecting point with the mechanical link 360 is positioned at a distance D from the pivot point between the first lever 22 and the tilting lever 32, thereby providing a lever arm allowing tilting of the tilting lever 32 when exerting a load F' on the mechanical link 360. When exerting a pulling load F' on the mechanical link 360, the tilting lever 32 will rotate and lead the rotation of the first lever 22 from a first position A (corresponding to the closed position of the door 12) to a second position B (corresponding to the open position of the door 12). The mechanical actuation 36 thus allows opening the door 12 with no loads (or with loads as low as possible) transmitted to the actuator 20, in case of failure of the actuation system (for example when the vehicle's battery is discharged).

Alternatively, as shown in Figure 7b, the mechanical actuation device 36 includes a mechanical link 360 connected to a connecting part 389 provided on the actuation lever 26. The connecting part 389 is configured in such a way that the connecting point with the mechanical link 360 is positioned at a distance D from the pivot point between the actuation arm 28 and the actuation lever 26, thereby providing a lever arm allowing rotation of the actuation lever 26 when exerting a load F' on the mechanical link 360. When exerting a pulling load F' on the mechanical link 360, the actuation lever 26 will rotate and lead the rotation of the actuation arm 28, which will in turn lead the rotation of the tilting lever, and therefore of the first lever 22 from a first position A (corresponding to the closed position of the door 12) to a second position B (corresponding to the open position of the door 12).

## Claims

1. A charge port door assembly (10) for a vehicle (1), comprising :
- a charge port door (12);
- an actuation system (16), configured to move the charge port door (12) between a closed position, in which the door (12) is intended to cover a charge port of a vehicle (1) and to remain flush with an outer surface of the vehicle (1), and an open position, in which the door (12) is intended to permit access to the charge port, the actuation system (16) comprising a linkage (18) connecting the door (12) to a support intended to be fixed relative to the vehicle (1), and an actuator (20) configured to actuate the linkage (18) to move the door (12),
the linkage (18) comprising at least a first lever (22) rotatably coupled to the door (12), the actuation system (16) further comprising at least an actuation arm (28) being directly or indirectly connected at a first end (280) to an output member (200) of the actuator (20), and connected at an opposite, second end (282) to a tilting member (30), the actuation arm being movable between a first position corresponding to the closed position of the door (12) and a second position corresponding to the open position of the door (12),
**characterized in that**
the tilting member (32) comprising a tilting lever (32) and an elastic biasing device (34), the tilting lever (32) being rotatably coupled to the actuation arm (28), and being rotatably coupled to the first lever (22), so as to be moveable relative to the first lever (22) between a blocking position and an extended position, the elastic biasing device (24) being configured to bias the tilting lever (32) towards the blocking position.

2. The charge port door assembly (10) according to claim 1, wherein:
- when the actuation arm (28) is in the first position and the tilting lever (32) is in the blocking position, the door (12) is in the closed position,
- when the actuation arm (28) is in the first position and the tilting lever (32) is in the extended position, the door (12) is in the open position.

3. The charge port door assembly (10) according to claim 1 or 2, wherein, when the tilting lever (32) is in the blocking position, a bearing surface (328) of the tilting lever (32) bears on a corresponding bearing surface (226) of the first lever (22).

4. The charge port door assembly (10) according to any of claims 1 to 3, wherein the elastic biasing device (34) is configured to allow the tilting lever (32) moving from the blocking position when the tilting lever (32) is subjected to a load which is higher than a specified load.

5. The charge port door assembly (10) according to claim 4, wherein the specified load is lower than a load likely to damage the actuation system (16), and in particular the actuator (20).

6. The charge port door assembly (10) according to claim 4 or claim 5, wherein the specified load is higher than a maximum load to which the tilting lever (32) is subjected during normal operation of the actuation system (16).

7. The charge port door assembly (10) according to anyone of claims 1 to 6, wherein the elastic biasing device (34) is a spring, for example a coil torsion spring (34).

8. The charge port door assembly (10) according to claim 7, wherein the spring rate of the spring (34) is such that the tilting lever (32) reaches the extended position when the tilting lever (32) is subjected to a load, the value of which is lower than the value of a load likely to damage the actuation system (16), and in particular the actuator (20).

9. The charge port door assembly (10) according to anyone of the preceding claims, wherein the actuator (20) is an electric rotary actuator.

10. The charge port door assembly (10) according to anyone of the preceding claims, wherein the linkage (18) includes a second lever (24), each of the first and second levers (22, 24) being hinged at one end (220, 240) to the support and being hinged at an opposite end (222, 242) to the door (12), the first and second levers (22, 24) being configured as a parallelogram mechanism.

11. The charge port assembly (10) according to anyone of claims 1 to 10, wherein the actuation arm (28) is rotatably coupled at a first end (280) to the tilting lever (32) and is rotatably coupled at a second end (282) to an actuation lever (26), the actuation lever (26) being fixedly coupled to the output member (200) of the actuator (20).

12. The charge port door assembly according to anyone of the preceding claims, wherein the actuation system includes a mechanical actuation device (36), the mechanical actuation device (36) comprising a mechanical link (360), such as a Bowden cable or a rod, connected to the tilting lever (32).

13. The charge port door assembly according to claim 11, wherein the actuation system includes a mechanical actuation device (36), the mechanical actuation device (36) comprising a mechanical link (360), such as a Bowden cable or a rod, connected to the actuation lever (26).

14. A vehicle (1) comprising a charge port mounted on a support and a charge port door assembly (10) according to anyone of the preceding claims.

## Patentansprüche

1. Ladeanschlusstürbaugruppe (10) für ein Fahrzeug (1), umfassend:
- eine Ladeanschlusstür (12);
- ein Betätigungssystem (16), das dazu eingerichtet ist, die Ladeanschlusstür (12) zwischen einer geschlossenen Position, in der die Tür (12) einen Ladeanschluss eines Fahrzeugs (1) abdecken und bündig mit einer Außenfläche des Fahrzeugs (1) bleiben soll, und einer geöffneten Position, in der die Tür (12) den Zugang zum Ladeanschluss ermöglichen soll, zu bewegen, wobei das Betätigungssystem (16) ein Gestänge (18) umfasst, das die Tür (12) mit einer Stütze verbindet, die relativ zum Fahrzeug (1) befestigt werden soll, und ein Betätigungsglied (20) ausgebildet, um das Gestänge (18) zum Bewegen der Tür (12) zu betätigen,
wobei das Gestänge (18) mindestens einen ersten Hebel (22) umfasst, der drehbar mit der Tür (12) gekoppelt ist, wobei das Betätigungssystem (16) ferner mindestens einen Betätigungsarm (28) umfasst, der an einem ersten Ende (280) direkt oder indirekt mit einem Ausgangselement (200) des Betätigungsglieds (20) verbunden ist, und an einem gegenüberliegenden, zweiten Ende (282) mit einem Kippelement (30) verbunden ist, wobei der Betätigungsarm zwischen einer ersten Position, die der geschlossenen Position der Tür (12) entspricht, beweglich ist und einer zweiten Position, die der geöffneten Position der Tür (12) entspricht,
**dadurch gekennzeichnet, dass**
das Kippelement (32), umfassend einen Kipphebel (32) und eine elastische Vorspannvorrichtung (34), wobei der Kipphebel (32) drehbar mit dem Betätigungsarm (28) gekoppelt ist und drehbar mit dem ersten Hebel (22) gekoppelt ist, sodass er relativ zum ersten Hebel (22) zwischen einer Sperrstellung und einer ausgefahrenen Stellung beweglich ist, wobei die elastische Vorspannvorrichtung (24) so eingerichtet ist, dass sie den Kipphebel (32) in Richtung der Sperrstellung vorspannt.

2. Ladeanschlusstürbaugruppe (10) nach Anspruch 1, wobei:
- wenn sich der Betätigungsarm (28) in der ersten Stellung und der Kipphebel (32) in der Sperrstellung befindet, befindet sich die Tür (12) in der geschlossenen Stellung,
- wenn sich der Betätigungsarm (28) in der ersten Position und der Kipphebel (32) in der ausgefahrenen Position befindet, befindet sich die Tür (12) in der geöffneten Position.

3. Ladeanschlusstürbaugruppe (10) nach Anspruch 1 oder 2, wobei, wenn sich der Kipphebel (32) in der Sperrstellung befindet, eine Lagerfläche (328) des Kipphebels (32) auf einer entsprechenden Lagerfläche (226) des ersten Hebels (22) aufliegt.

4. Ladeanschlusstürbaugruppe (10) nach einem der Ansprüche 1 bis 3, wobei die elastische Vorspannvorrichtung (34) so eingerichtet ist, dass sie es dem Kipphebel (32) ermöglicht, sich aus der Sperrstellung zu bewegen, wenn der Kipphebel (32) einer Last ausgesetzt ist, die höher als eine spezifizierte Last ist.

5. Ladeanschlusstürbaugruppe (10) nach Anspruch 4, wobei die angegebene Last geringer ist als eine Last, die das Betätigungssystem (16), insbesondere das Betätigungsglied (20), beschädigen könnte.

6. Ladeanschlusstürbaugruppe (10) nach Anspruch 4 oder Anspruch 5, wobei die angegebene Last höher ist als eine maximale Last, der der Kipphebel (32) während des normalen Betriebs des Betätigungssystems (16) ausgesetzt ist.

7. Ladeanschlusstürbaugruppe (10) nach einem der Ansprüche 1 bis 6, wobei die elastische Vorspannvorrichtung (34) eine Feder, beispielsweise eine Spiraltorsionsfeder (34), ist.

8. Ladeanschlusstürbaugruppe (10) nach Anspruch 7, wobei die Federrate der Feder (34) derart ist, dass der Kipphebel (32) die ausgefahrene Position erreicht, wenn der Kipphebel (32) einer Last ausgesetzt wird, deren Wert geringer ist als der Wert einer Last, die das Betätigungssystem (16) und insbesondere das Betätigungsglied (20) beschädigen kann.

9. Ladeanschlusstürbaugruppe (10) nach einem der vorhergehenden Ansprüche, wobei das Betätigungsglied (20) ein elektrischer Drehantrieb ist.

10. Ladeanschlusstürbaugruppe (10) nach einem der vorhergehenden Ansprüche, wobei das Gestänge (18) einen zweiten Hebel (24) beinhaltet, wobei jeder der ersten und zweiten Hebel (22, 24) an einem Ende (220, 240) an der Stütze und an einem gegenüberliegenden Ende (222, 242) der Tür (12) scharniert ist, wobei der erste und der zweite Hebel (22, 24) als Parallelogrammmechanismus ausgebildet sind.

11. Ladeanschlussbaugruppe (10) nach einem der Ansprüche 1 bis 10, wobei der Betätigungsarm (28) an einem ersten Ende (280) drehbar mit dem Kipphebel (32) und an einem zweiten Ende (282) drehbar mit einem Betätigungshebel (26) gekoppelt ist, wobei der Betätigungshebel (26) fest mit dem Ausgangselement (200) des Betätigungsglieds (20) gekoppelt ist.

12. Ladeanschlusstürbaugruppe nach einem der vorhergehenden Ansprüche, wobei das Betätigungssystem eine mechanische Betätigungsvorrichtung (36) beinhaltet, wobei die mechanische Betätigungsvorrichtung (36) eine mechanische Verbindung (360) umfasst, wie ein Bowdenzug oder eine Stange, die mit dem Kipphebel (32) verbunden ist.

13. Ladeanschlusstürbaugruppe nach Anspruch 11, wobei das Betätigungssystem eine mechanische Betätigungsvorrichtung (36) beinhaltet, wobei die mechanische Betätigungsvorrichtung (36) eine mechanische Verbindung (360) umfasst, wie beispielsweise einen Bowdenzug oder eine Stange, die mit dem Betätigungshebel (26) verbunden ist.

14. Fahrzeug (1), umfassend einen Ladeanschluss, der auf einer Stütze montiert ist, und eine Ladeanschlusstürbaugruppe (10) nach einem der vorhergehenden Ansprüche.

## Revendications

1. Ensemble trappe de prise de recharge (10) pour un véhicule (1), comprenant :
- une trappe de prise de recharge (12) ;
- un système d'actionnement (16), configuré pour déplacer la trappe de prise de recharge (12) entre une position fermée, dans laquelle la trappe (12) est destinée à couvrir une prise de recharge d'un véhicule (1) et à rester au même niveau qu'une surface externe du véhicule (1), et une position ouverte, dans laquelle la trappe (12) est destinée à permettre l'accès à la prise de recharge, le système d'actionnement (16) comprenant une tringlerie (18) reliant la trappe (12) à un support destiné à être fixe par rapport au véhicule (1), et un actionneur (20) configuré pour actionner la tringlerie (18) afin de déplacer la trappe (12),
la tringlerie (18) comprenant au moins un premier levier (22) couplé en rotation à la trappe (12),
le système d'actionnement (16) comprenant en outre au moins un bras d'actionnement (28) qui est relié directement ou indirectement au niveau d'une première extrémité (280) à un organe de sortie (200) de l'actionneur (20) et relié au niveau d'une seconde extrémité opposée (282) à un organe basculant (30), le bras d'actionnement étant mobile entre une première position correspondant à la position fermée de la trappe (12) et une seconde position correspondant à la position ouverte de la trappe (12),
**caractérisé en ce que**
l'organe basculant (32) comprenant un levier basculant (32) et un dispositif de sollicitation élastique (34),
le levier basculant (32) étant couplé en rotation au bras d'actionnement (28) et étant couplé en rotation au premier levier (22), de manière à être mobile par rapport au premier levier (22) entre une position de blocage et une position étendue, le dispositif de sollicitation élastique (24) étant configuré pour solliciter le levier basculant (32) vers la position de blocage.

2. Ensemble trappe de prise de recharge (10) selon la revendication 1, dans lequel :
- lorsque le bras d'actionnement (28) est dans la première position et le levier basculant (32) est dans la position de blocage, la trappe (12) est dans la position fermée,
- lorsque le bras d'actionnement (28) est dans la première position et le levier basculant (32) est dans la position étendue, la trappe (12) est dans la position ouverte.

3. Ensemble trappe de prise de recharge (10) selon la revendication 1 ou 2, dans lequel, lorsque le levier basculant (32) est dans la position de blocage, une surface d'appui (328) du levier basculant (32) s'appuie sur une surface d'appui correspondante (226) du premier levier (22).

4. Ensemble trappe de prise de recharge (10) selon l'une des revendications 1 à 3, dans lequel le dispositif de sollicitation élastique (34) est configuré pour permettre au levier basculant (32) de se déplacer de la position de blocage lorsque le levier basculant (32) est soumis à une charge qui est supérieure à une charge spécifiée.

5. Ensemble trappe de prise de recharge (10) selon la revendication 4, dans lequel la charge spécifiée est inférieure à une charge susceptible d'endommager le système d'actionnement (16), et en particulier l'actionneur (20).

6. Ensemble trappe de prise de recharge (10) selon la revendication 4 ou 5, dans lequel la charge spécifiée est supérieure à une charge maximale à laquelle le levier basculant (32) est soumis pendant le fonctionnement normal du système d'actionnement (16).

7. Ensemble trappe de prise de recharge (10) selon l'une quelconque des revendications 1 à 6, dans lequel le dispositif de sollicitation élastique (34) est un ressort, par exemple un ressort de torsion hélicoïdal (34).

8. Ensemble trappe de prise de recharge (10) selon la revendication 7, dans lequel la raideur de ressort du ressort (34) est telle que le levier basculant (32) atteint la position étendue lorsque le levier basculant (32) est soumis à une charge dont la valeur est inférieure à la valeur d'une charge susceptible d'endommager le système d'actionnement (16), et en particulier l'actionneur (20).

9. Ensemble trappe de prise de recharge (10) selon l'une quelconque des revendications précédentes, dans lequel l'actionneur (20) est un actionneur rotatif électrique.

10. Ensemble trappe de prise de recharge (10) selon l'une quelconque des revendications précédentes, dans lequel la tringlerie (18) comprend un second levier (24), chacun des premier et second leviers (22, 24) étant articulé au niveau d'une extrémité (220, 240) au support et étant articulé au niveau d'une extrémité opposée (222, 242) à la trappe (12), les premier et second leviers (22, 24) étant configurés comme un mécanisme à parallélogramme.

11. Ensemble prise de recharge (10) selon l'une quelconque des revendications 1 à 10, dans lequel le bras d'actionnement (28) est couplé en rotation au niveau d'une première extrémité (280) au levier basculant (32) et est couplé en rotation au niveau d'une seconde extrémité (282) à un levier d'actionnement (26), le levier d'actionnement (26) étant couplé de manière fixe à l'organe de sortie (200) de l'actionneur (20).

12. Ensemble trappe de prise de recharge selon l'une quelconque des revendications précédentes, dans lequel le système d'actionnement comprend un dispositif d'actionnement mécanique (36), le dispositif d'actionnement mécanique (36) comprenant une liaison mécanique (360), telle qu'un câble Bowden ou une tige, reliée au levier basculant (32).

13. Ensemble trappe de prise de recharge selon la revendication 11, dans lequel le système d'actionnement comprend un dispositif d'actionnement mécanique (36), le dispositif d'actionnement mécanique (36) comprenant une liaison mécanique (360), telle qu'un câble Bowden ou une tige, reliée au levier d'actionnement (26).

14. Véhicule (1) comprenant une prise de recharge montée sur un support et un ensemble trappe de prise de recharge (10) selon l'une quelconque des revendications précédentes.
